# EUROPÄISCHE PATENTANMELDUNG

(11) **EP 2 215 935 A2**
(43) Veröffentlichungstag der Anmeldung: **11.08.2010**
(21) Anmeldenummer: 10151077.4
(22) Anmeldetag: 19.01.2010
(51) Int. Cl.: A47F 7/00

(54) **Blinkerpräsentationsvorrichtung**

(30) Priorität: 06.02.2009 DE 202009001526 U
(71) Anmelder: POLO EXPRESSVERSAND Gesellschaft für Motorradbekleidung und Sportswear mbH, 41363 Jüchen (DE)
(72) Erfinder: Lentzen, Petra, 47877 Willich (DE)
(74) Vertreter: Kluin, Jörg-Eden

(57) **Zusammenfassung**

Eine Blinkerpräsentationsvorrichtung (100) mit mehreren Blinkern (1) und mehreren manuell betätigbaren Schaltern (3) und einem Steuergerät (2), wobei das Steuergerät (2) mindestens einen vollautomatischen und mindestens einen halbautomatischen Betriebsmodus umfasst und die Betriebsmodi aufeinander abgestimmt sind.

## Beschreibung

Die Erfindung betrifft eine Blinkerpräsentationsvorrichtung zur Präsentation von Blinkern, also Fahrtrichtungsanzeigern, insbesondere von Motorrädern.

Es sind Vorrichtungen bekannt, mit denen die Funktionsfähigkeit oder die Funktionsweise von Leuchtmitteln gegenüber Kaufinteressenten demonstriert werden kann.

Die Erfindung hat es sich zur Aufgabe gemacht, eine Vorrichtung zu schaffen, die besonders gut zur Demonstration der Funktionsweise von Blinkern, insbesondere Motorradblinkern geeignet ist.

Diese Aufgabe wird durch die in Anspruch 1 wiedergegebene Blinkerpräsentationsvorrichtung gelöst. Die erfindungsgemäße Blinkerpräsentationsvorrichtung umfasst mehrere Blinker, mehrere manuell betätigbare Schalter und ein Steuergerät. Das Steuergerät umfasst mindestens einen vollautomatischen und mindestens einen halbautomatischen Betriebsmodus. Die Betriebsmodi sind aufeinander abgestimmt. Die derartige Blinkerpräsentation verbindet die Vorzüge einer rein vollautomatischen Blinkerpräsentation mit den Vorzügen einer rein halbautomatischen Blinkerpräsentation. In dem halbautomatischen Betriebsmodus können die Blinker etwa von einem Kaufinteressenten gezielt angewählt und auf Ihre Funktionsweise getestet werden. Im vollautomatischen Betriebsmodus ist eine Betätigung der Blinker auch dann gewährleistet, wenn noch kein Kaufinteressent (oder Verkäufer) diese vornimmt. Die Blinkerpräsentation ist also auch in dieser Phase attraktiv und spricht den Kunden an.

In der bevorzugten Ausführungsform sind die Betriebsmodi derart aufeinander abgestimmt, dass durch Betätigen eines Schalters ein Wechsel von dem vollautomatischen zu dem halbautomatischen Betriebsmodus erfolgt. Hierdurch wird auf nutzerfreundliche Art erreicht, dass der bereits interessierte Nutzer (Kunde) den für ihn interessanten Blinker gezielt testen kann. Durch den halbautomatischen Charakter dieses Betriebsmodus kann dieser Test besonders komfortabel erfolgen.

Vorzugsweise wechselt das Steuergerät nach einer vorwählbaren Zeit nach der letzten manuellen Betätigung der Schalter selbsttätig von dem halbautomatischen zu dem vollautomatischen Betriebsmodus zurück. Hierdurch ist es nicht erforderlich, dass dieser Wechsel von dem Kunden oder einem Verkäufer vorgenommen wird.

In der bevorzugten Ausführungsform blinken im vollautomatischen Betriebsmodus sämtliche Blinker gemeinsam für eine vorbestimmbare Zeit, worauf eine vorbestimmbare Pause folgt, bevor die Blinker erneut für die vorbestimmbare Zeit blinken.

Vorzugsweise blinken die Blinker im vollautomatischen Betriebsmodus für etwa 20 Sekunden gemeinsam und die Dauer der Pause beträgt etwa 10 Sekunden. Es hat sich gezeigt, dass dieser Betriebsmodus besonders gut geeignet ist, Aufmerksamkeit zu erregen.

Es sind auch andere vollautomatische Betriebsmodi denkbar. Beispielsweise können die einzelnen Blinker oder Gruppen von Blinkern in gleichbleibender oder sich verändernder Reihenfolge blinken. Ebenso ist es denkbar, die Blinkerpräsentationsvorrichtung mit einem Bewegungsmelder auszurüsten und den vollautomatischen Betriebsmodus nur dann zu starten, wenn eine Bewegung, die auf die Anwesenheit eines Kaufinteressenten zurückzuführen ist, registriert wird. Schließlich ist denkbar, dass das Steuergerät die Blinker im vollautomatischen Betriebsmodus geräuschabhängig, etwa in Abhängigkeit von Hintergrundmusik (Lichtorgel) ansteuert.

Vorzugsweise blinkt im halbautomatischen Betriebsmodus ein einziger Blinker für die Dauer der Schalterbetätigung zuzüglich 10 Sekunden. Hierdurch ist der von dem Kaufinteressenten initiierte Einzeltest eines Blinkers besonders komfortabel. Sollte die Blinkerpräsentation mehrere (etwa zwei) gleiche Blinker aufweisen, so ist denkbar, dass diese im halbautomatischen Betriebsmodus gleichzeitig oder nacheinander blinken.

Vorzugsweise ist eine Vielzahl verschiedener halbautomatischer Betriebsmodi vorgesehen.

Weiterhin ist bevorzugt, dass jeder Schalter jeweils mindestens einem Blinker zuordbar ist. Die Zuordnung kann etwa räumlich und zum Beispiel dadurch erfolgen, dass die Schalter in der Nähe des mindestens einen Blinkers vorgesehen sind.

Vorzugsweise wird mit jedem Schalter ein anderer halbautomatischer Betriebsmodus initiiert und - besonders bevorzugt - erfolgt durch Betätigen eines Schalters ein Wechsel in den halbautomatischen Betriebsmodus, bei dem der mindestens eine Blinker blinkt, der dem betätigten Schalter zuordbar ist. Hierdurch wird erreicht, dass durch die Betätigung eines einzigen Schalters zum einen der Betriebsmodus der Blinkerpräsentation derart wechselt, dass ein vereinzeltes Testen eines oder mehrerer Blinker möglich ist und es wird zum anderen gleichzeitig genau der halbautomatische Betriebsmodus in Gang gesetzt, der den gewünschten Blinker betätigt.

Vorzugsweise können mehrere halbautomatische Betriebsmodi kombiniert werden. Es ist also möglich, mehrere Schalter zeitgleich oder kurz hintereinander zu betätigen und hierdurch mehrere verschiedene Blinker im direkten Vergleich zeitgleich zu testen.

Vorzugsweise weist das Steuergerät der Blinkerpräsentationsvorrichtung ein Display und Eingabetasten auf, mittels derer die Betriebsmodi veränderbar sind. Hierdurch kann der Nutzer, etwa der Betreiber eines Ladenlokals, die Betriebsmodi der Blinkerpräsentationsvorrichtung nach seinen Vorstellungen anpassen. Beispielsweise kann er die Dauer verändern, für die die Blinker in dem vollautomatischen Betriebsmodus gleichzeitig blinken.

Vorzugsweise sind mehrere Transformatoren vorgesehen, die jeweils einen eigenen Lüfter aufweisen und die Drehzahl dieser Lüfter ist von der Temperatur in dem Gehäuse abhängig. Durch die Anpassung der Lüfterdrehzahl an die Gehäusetemperatur ist eine energiesparende Kühlung der Transformatoren gewährleistet.

Die Erfindung soll nun an Hand eines in den Zeichnungen gezeigten Ausführungsbeispiels näher erläutert werden. Es zeigen:
- Fig. 1: eine Frontalansicht einer Blinkerpräsentation mit geschlosse- nem Gehäuse;
- Fig. 2: eine Ansicht wie Fig. 1 mit geöffnetem Gehäuse;
- Fig. 3: eine perspektivische Ansicht auf einen Teil einer Blinkerprä- sentation mit geöffnetem Gehäuse von schräg vorne;
- Fig. 4: eine schematische Darstellung des Displays des Steuergerä- tes;
- Fig. 5: eine weitere schematische Ansicht des Displays des Steuer- gerätes.

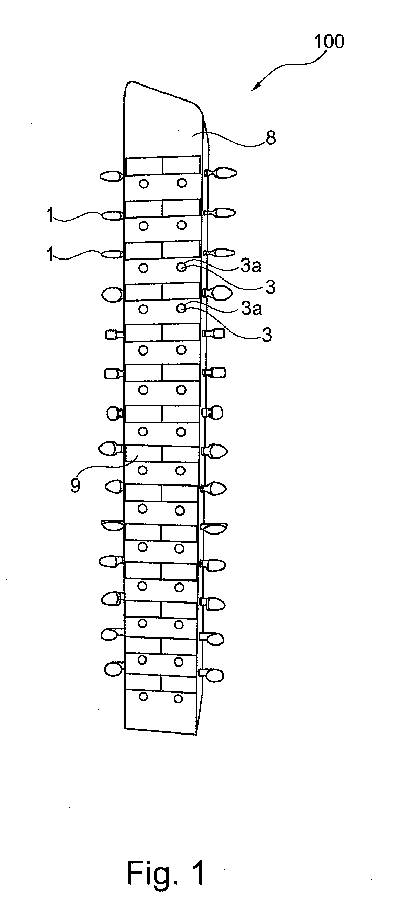

Die als Ganzes mit 100 bezeichnete Blinkerpräsentationsvorrichtung umfasst eine Vielzahl von Blinkern 1, ein Steuergerät 2, welches ein Display 2a und Eingabetasten 2b umfasst, eine Anzahl von Schaltern 3, die der Anzahl der Blinker 1 entspricht und die in dem gezeigten Ausführungsbeispiel als Taster 3a ausgebildet sind, sowie ein Gehäuse 8. Wie insbesondere Fig. 1 zeigt, ist das Gehäuse 8 der Blinkerpräsentationsvorrichtung 100 quaderförmig gestaltet und weist Blinker 1 in zwei einander gegenüberliegenden Reihen auf. Die Taster 3a sind auf der dem Betrachter zugewandten Fläche des Quaders, jeweils in der Nähe eines Blinkers 1 angeordnet. Über jedem Taster 3a befindet sich ein für die Aufnahme von Produktinformation geeignetes Feld 9.

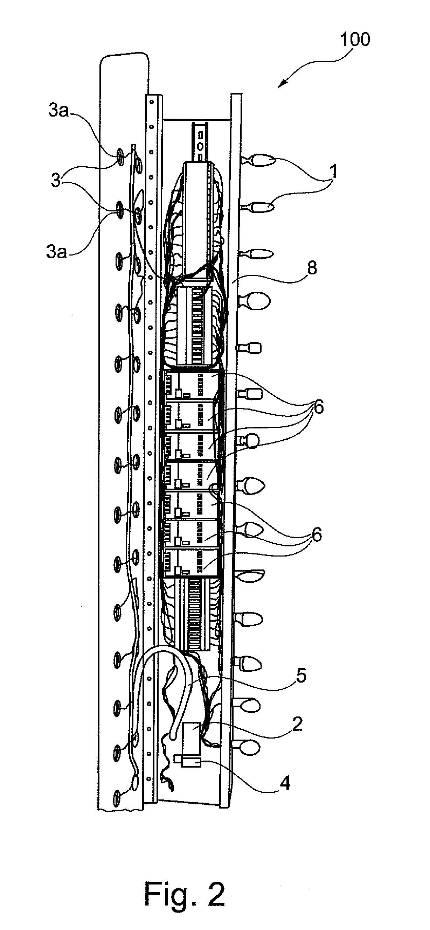

Wie aus Fig. 2 hervorgeht, sind die Taster 3a über ein Steuerkabel 5 mit dem Steuergerät 2 verbunden. Das Steuerkabel 5 ist 36-adrig.

Das Steuergerät 2 umfasst zwei Siemens®-LOGO-SPS-Steuerungen, die in dem Gehäuse 8 auf einer Hutschiene angeordnet sind. Die Haupteinheit des Steuergerätes 2 befindet sich im unteren Teil des Gehäuses 8 direkt neben einem 16A-Sicherungsautomaten 4, der als Hauptschalter dient.

Es sind sieben Transformatoren 6 vorgesehen. Um eine Überhitzung der Transformatoren 6 zu vermeiden, sind alle sieben Transformatoren 6 mit einem eigenen Lüfter ausgestattet. Die Lüfter laufen mit verringerter Drehzahl, solange sich die Gehäusetemperatur im Normalbereich befindet. Bei höheren Temperaturen wird die Drehzahl der Lüfter automatisch erhöht. Die Blinker 1 sind über Rundsteckhülsen 7 angeschlossen, um einen einfachen Wechsel zu ermöglichen. Die Plusleitungen sind zusätzlich mit Schrumpfschlauch isoliert, der bei einem Wechsel der Blinker aufgeschnitten werden muss, um die Stecker zu lösen.

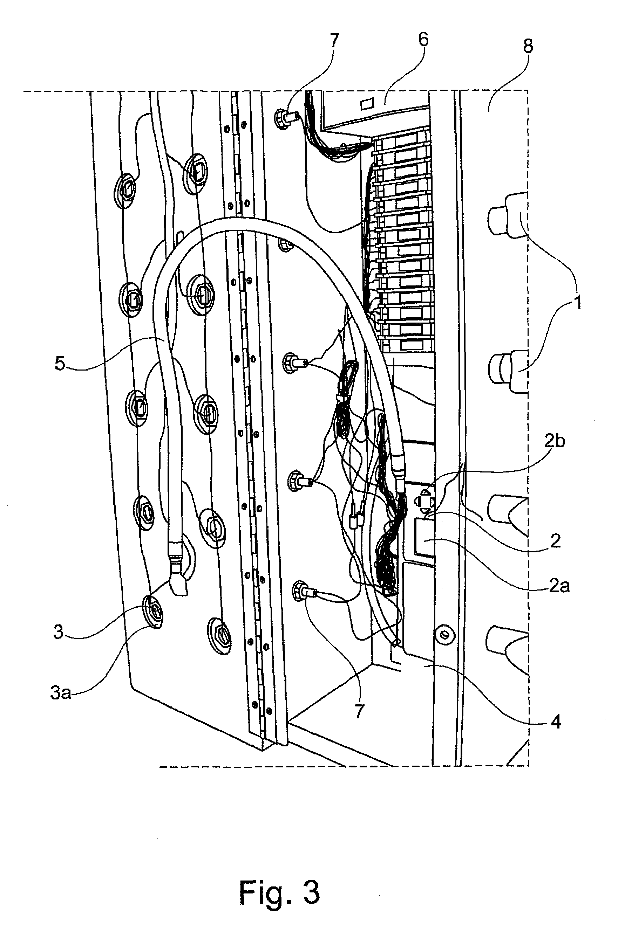

Fig. 3 zeigt den unteren Bereich des Inneren des Gehäuses 8, mit dem Steuergerät 2 samt Display 2a und Eingabetasten 2b.

Nach dem Einschalten befindet sich das Steuergerät im vollautomatischen Betriebsmodus. Das gespeicherte Programm läuft automatisch und ohne weitere Interaktion ab. Sämtliche Blinker 1 blinken gemeinsam für 20 Sekunden, danach gibt es eine Pause von 10 Sekunden, wonach das Programm von neuem beginnt.

Die Taster 3a umfassen im gezeigten Ausführungsbeispiel Edelstahl. Durch Drücken eines Tasters 3a neben einem Blinker 1 blinkt dieser Blinker 1 für die Dauer des Tastendrucks zuzüglich von 10 Sekunden selbsttätig. Werden während dieses halbautomatischen Betriebsmodus weitere Taster 3a betätigt, blinken die diesen weiteren Tastern zugehörigen Blinker 1 ebenfalls jeweils für 10 Sekunden. Nach Ablauf von 10 Sekunden, nachdem der letzte Taster 3a betätigt wurde, wechselt das Steuergerät 2 selbsttätig in den vollautomatischen Betriebsmodus.

Dem Nutzer stehen zwei verschiedene Anzeigen im Display 2a zur Verfügung, die zur Veränderung der Programmparameter mittels der Eingabetasten 2b nutzbar sind. Der Nutzer kann mittels der Eingabetasten zwischen den Anzeigen wechseln. Durch 2-Sekunden langes Drücken der Eingabetaste "ESC" erfolgt ein Wechsel in den Programmiermodus und es erscheint ein Cursorsymbol unter dem ersten Zeichen des änderbaren Wertes. Durch Drücken der Eingabetaste ">" (Cursor rechts) ist ein Wechsel zwischen den Werten möglich. Durch Drücken der Taste "O.K." ist ein Anwählen eines Wertes und ein Ändern über die Cursor Tasten "Auf"/ "Ab" möglich. Mit "ESC" kann der Programmiermodus verlassen werden.

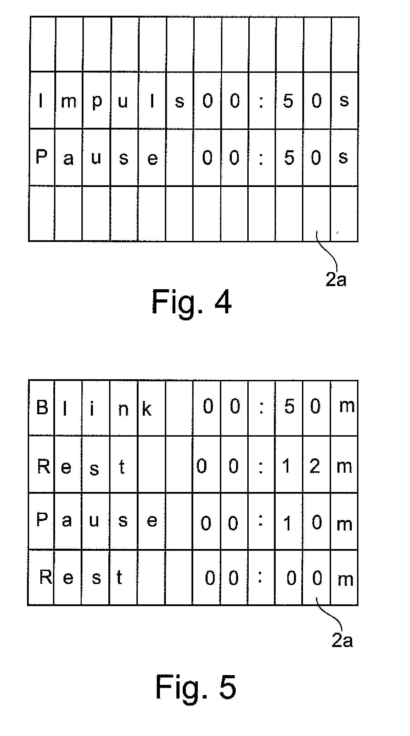

Die in Fig. 4 gezeigte erste Anzeige bezieht sich auf die Frequenz der Blinker. Der Wert "Impuls" gibt die Einschaltdauer der Lampen beim Blinken an. Der Wert "Pause" gibt die Dauer der Pause zwischen zwei Einschaltphasen an. Mittels der Eingabetasten 2b können die Werte von dem Nutzer geändert werden. Die in Fig. 5 gezeigte zweite Anzeige bezieht sich auf die Parameter im vollautomatischen Betriebsmodus. Der Wert "Blink" gibt die Dauer der Blinkphase an. Der Wert "Rest" gibt die restliche Laufzeit der Blinkphase an. Der Wert "Pause" gibt die Zeit zwischen zwei Blinkphasen an. Der Wert "Rest" unter dem Wert "Pause" gibt die restliche Laufzeit der Pause an. Die Werte "Blink" und "Pause" können verändert werden.

### Bezugszeichenliste:

- 100: Blinkerpräsentationsvorrichtung
- 1: Blinker
- 2: Steuergerät
- 2a: Display
- 2b: Eingabetasten
- 3: Schalter
- 3a: Taster
- 4: Sicherungsautomat
- 5: Steuerkabel
- 6: Transformatoren
- 7: Rundsteckhülse
- 8: Gehäuse
- 9: Feld

## Patentansprüche

1. Blinkerpräsentationsvorrichtung (100) mit mehreren Blinkern (1) und mehreren manuell betätigbaren Schaltern (3) und einem Steuergerät (2), wobei das Steuergerät (2) mindestens einen vollautomatischen und mindestens einen halbautomatischen Betriebsmodus umfasst und die Betriebsmodi aufeinander abgestimmt sind.

2. Blinkerpräsentationsvorrichtung nach Anspruch 1, **dadurch gekennzeichnet, dass** durch Betätigen eines Schalters (3) ein Wechsel von dem vollautomatischen zu dem halbautomatischen Betriebsmodus erfolgt.

3. Blinkerpräsentationsvorrichtung nach Anspruch 1 oder 2, **dadurch gekennzeichnet, dass** nach einer vorwählbaren Zeit nach der letzten manuellen Betätigung der Schalter (3) das Steuergerät (2) selbsttätig von dem halbautomatischen zu dem vollautomatischen Betriebsmodus wechselt.

4. Blinkerpräsentationsvorrichtung nach einem der Ansprüche 1 bis 3, **dadurch gekennzeichnet, dass** im vollautomatischen Betriebsmodus sämtliche Blinker (1) gemeinsam für eine vorbestimmbare Zeit blinken und danach eine vorbestimmbare Pause folgt, bevor die Blinker (1) erneut für die vorbestimmbare Zeit blinken.

5. Blinkerpräsentationsvorrichtung nach Anspruch 4, **dadurch gekennzeichnet, dass** eine Zeit von etwa 20 Sekunden vorbestimmt ist und eine Pause von etwa 10 Sekunden.

6. Blinkerpräsentationsvorrichtung nach einem der Ansprüche 1 bis 5, **dadurch gekennzeichnet, dass** im halbautomatischen Betriebsmodus ein einziger Blinker (1) für die Dauer der Schalterbetätigung zuzüglich 10 Sekunden blinkt.

7. Blinkerpräsentationsvorrichtung nach einem der Ansprüche 1 bis 6, **dadurch gekennzeichnet, dass** das Steuergerät (2) eine Vielzahl verschiedener halbautomatischer Betriebsmodi aufweist.

8. Blinkerpräsentationsvorrichtung nach Anspruch 1 bis 7, **dadurch gekennzeichnet, dass** jeder Schalter (3) jeweils mindestens einem Blinker (1) zuordbar ist.

9. Blinkerpräsentationsvorrichtung nach Anspruch 7 oder 8, **dadurch gekennzeichnet, dass** mit jedem Schalter (3) ein anderer halbautomatischer Betriebsmodus initiierbar ist.

10. Blinkerpräsentationsvorrichtung nach Anspruch 8 oder 9, **dadurch gekennzeichnet, dass** durch Betätigen eines Schalters (3) ein Wechsel in den halbautomatischen Betriebsmodus erfolgt, bei dem der mindestens eine Blinker (1) blinkt, der dem betätigten Schalter (3) zuordbar ist.

11. Blinkerpräsentationsvorrichtung nach einem der Ansprüche 1 bis 10, **dadurch gekennzeichnet, dass** das Steuergerät (2) ein Display (2a) und Eingabetasten (2b) aufweist, mittels derer die Betriebsmodi veränderbar sind.

12. Blinkerpräsentationsvorrichtung nach einem der Ansprüche 1 bis 11, **dadurch gekennzeichnet, dass** mehrere Transformatoren 6 vorgesehen sind, die jeweils einen eigenen Lüfter aufweisen und die Drehzahl der Lüfter von der Temperatur in dem Gehäuse (8) abhängig ist.
